# FASCICULE DE BREVET EUROPEEN

(11) **EP 0 670 252 B1**
(45) Date de publication et mention de la délivrance du brevet: **29.04.1998**
(21) Numéro de dépôt: 95102826.5
(22) Date de dépôt: 28.02.1995
(51) Int. Cl.: B60S 1/24, B60S 1/34

(54) **Tête d'entraînement pour essuie-glace de véhicule automobile**
Befestigungsteil für einen Scheibenwischer eines Kraftfahrzeuges
Drive head for a motor vehicle windscreen wiper

(30) Priorité: 03.03.1994 FR 9402469
(43) Date de publication de la demande: 06.09.1995
(73) Titulaire: VALEO SYSTEMES D'ESSUYAGE, 78320 La Verrière (FR)
(72) Inventeur: Raymond, Guy, F-63320 Neilhaud (FR)
(74) Mandataire: Gamonal, Didier

(56) Documents cités:
- EP-A- 0 517 436
- EP-A- 0 584 018
- WO-A-93/11977
- WO-A-93/11978
- DE-A- 4 140 959
- FR-A- 2 550 110
- US-A- 5 284 397

## Description

La présente invention concerne un essuie-glace de véhicule automobile.

L'invention concerne plus particulièrement un essuie-glace du type comportant une tête d'entraînement qui comprend une partie avant sur laquelle est articulé un bras d'essuie-glace, autour d'un axe d'articulation qui s'étend selon une direction sensiblement perpendiculaire à la direction longitudinale de l'essuie-glace, qui porte un balai d'essuie-glace, et qui comprend une partie arrière comportant des moyens de fixation de la tête d'entraînement sur l'extrémité d'un arbre d'entraînement en rotation de l'essuie-glace qui permet de l'entraîner dans un mouvement alternatif de rotation autour d'un axe qui est sensiblement perpendiculaire à l'axe d'articulation du bras sur la partie avant de la tête d'entraînement.

La fixation de la partie arrière de la tête d'entraînement sur l'extrémité de l'arbre d'entraînement est par exemple assurée au moyen d'un alésage conique qui traverse la tête d'entraînement et qui permet le passage de l'extrémité conique et filetée de l'arbre d'entraînement, et au moyen d'un écrou de serrage qui prend appui sur la face supérieure de la partie arrière de la tête d'entraînement.

Afin de réduire la masse de la tête d'entraînement, d'accroître sa résistance mécanique aux contraintes, notamment de fluage, de rupture et de fatigue, et afin d'améliorer la qualité de la liaison de la tête d'entraînement avec l'arbre d'entraînement, il a déjà été proposé dans le document DE-A-4.140.959 de réaliser la tête d'entraînement sous la forme d'un élément en tôle, et plus particulièrement sous la forme d'un corps tubulaire allongé de section générale cylindrique dont chacune des extrémités ouvertes reçoit un insert constituant les moyens de montage de la tête d'entraînement sur l'arbre d'entraînement et les moyens d'articulation du bras d'essuie-glace sur la tête d'entraînement.

Dans cette conception, les inserts sont sertis aux extrémités ouvertes du corps tubulaire et ils ne permettent pas d'assurer une fiabilité suffisante de leur liaison avec le corps tubulaire et l'ensemble de la tête d'entraînement ne présente pas non plus une rigidité suffisante lui permettant notamment de résister aux inversions du couple d'entraînement.

La présente invention a pour but de proposer un essuie-glace de véhicule automobile du type comportant une tête d'entraînement comportant un corps tubulaire en tôle de forme générale allongée, une partie avant d'articulation sur laquelle est articulé un bras d'essuie-glace qui porte un balai d'essuie-glace, et comportant une partie arrière de montage qui est réalisée sous la forme d'un élément rapporté fixé sur une portion d'extrémité arrière du corps tubulaire et qui permet le montage de la tête d'entraînement sur l'extrémité du arbre d'entraînement en rotation de l'essuie-glace, du type décrit et représenté dans le document DE-A-4.140.959, et qui remédie aux inconvénients qui viennent d'être mentionnés.

Dans ce but, l'invention propose un essuie-glace de ce type, caractérisé en ce que la portion d'extrémité arrière du corps tubulaire est une portion aplatie sur laquelle est fixé l'élément rapporté de montage.

Selon divert modes de réalisation de l'invention :
- la portion d'extrémité arrière aplatie du corps tubulaire s'étend dans un plan sensiblement perpendiculaire à l'axe de l'arbre d'entraînement ;
- les faces parallèles opposées de la porcion d'extrémité arrière aplatie du corps tubulaire et l'élément rapporté de montage comportent des trous alignés pour le passage de l'extrémité de l'arbre d'entraînement ;
- l'un au moins des trous formés dans les faces parallèles opposées de la portion d'extrémité arrière aplatie du corps tubulaire comporte un collet cylindrique ou conique réalisé venu de matière par déformation de la tôle ;
- l'élément rapporté de montage est réalisé par moulage ;
- l'élément rapporté de montage est surmoulé sur la portion d'extrémité arrière aplatie du corps tubulaire;
- les faces parallèles opposées de la portion d'extrémité arrière aplatie du corps tubulaire sont jointives ;
- chacun des deux trous formés dans les faces parallèles opposées de la portion d'extrémité arrière aplatie du corps tubulaire comporte un collet conique, les deux collets étant emboîtés l'un dans l'autre ;
- les faces parallèles opposées de la portion d'extrémité arrière aplatie du corps tubulaire sont espacées l'une de l'autre et délimitent un logement dans lequel est agencé l'élément de montage rapporté ;
- les bords d'extrémité arrière des faces parallèles opposées de la portion d'extrémité arrière aplatie du corps tubulaire sont rabattus transversalement pour obturer au moins partiellement l'extrémité arrière du corps tubulaire ;
- la partie avant d'articulation de la tête d'entraînement est réalisée sous la forme d'un élément d'articulation rapporté sur la portion d'extrémité avant du corps tubulaire ;
- l'élément rapporté d'articulation est surmoulé sur la portion d'extrémité avant du corps tubulaire ;
- la partie avant d'articulation comporte un insert pour recevoir l'axe d'articulation du bras d'essuie-glace;
- l'insert est réalisé venu de matière avec la portion d'extrémité avant du corps tubulaire ;
- l'insert est fixé à la portion d'extrémité avant du corps tubulaire ;
- la partie avant d'articulation de la tête d'entraînement est réalisée venue de matière avec la portion d'extrémité avant du corps tubulaire ;
- le corps tubulaire est sensiblement rectiligne ;
- le corps tubulaire présente un profil coudé ;
- le corps tubulaire comporte au moins une nervure longitudinale de rigidification.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective éclatée des principaux composants d'un essuie-glace parmi lesquels est illustrée une tête d'entraînement conforme à un premier mode de réalisation selon l'invention ;
- la figure 2 est une vue en section longitudinale de la tête d'entraînement illustrée sur la figure 1 ;
- la figure 3 est une vue similaire à celle de la figure 2 illustrant un deuxième mode de réalisation de la tête d'entraînement ;
- les figures 4 à 6 sont des vues partielles similaires à celles des figures 2 et 3 illustrant trois autres modes de réalisation de la partie avant d'articulation de la tête d'entraînement selon l'invention ;
- la figure 7 est une vue schématique en perspective d'un sixième mode de réalisation d'une tête d'entraînement selon l'invention ;
- la figure 8 est une vue en section longitudinale selon la ligne 8-8 de la figure 7 ;
- les figures 9 à 11 sont des vues schématiques en section longitudinale selon les lignes 9-9 à 11-11 de la figure 8 ;
- la figure 12 est une vue partielle de la portion arrière d'un septième mode de réalisation d'une tête d'entraînement selon l'invention ;
- les figures 13 et 14 sont des vues en section longitudinale et transversale, similaires à celles des figures 8 et 9, de la tête d'entraînement illustrée partiellement à la figure 12 ;
- la figure 15 est une vue similaire à celle de la figure 12 illustrant un huitième mode de réalisation d'une tête d'entraînement selon l'invention ; et
- la figure 16 est une vue schématique en section longitudinale de la tête d'entraînement illustrée partiellement à la figure 15.

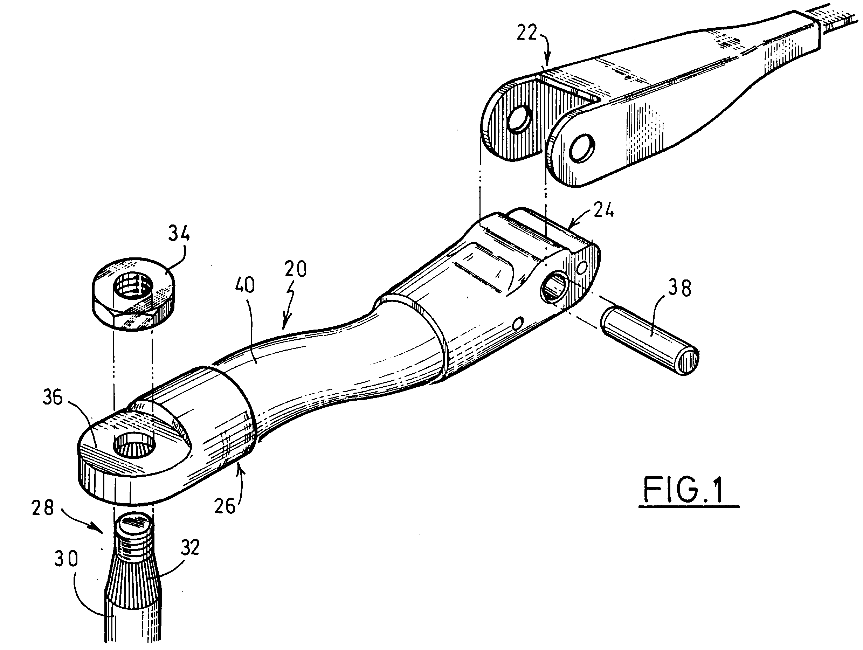

On a représenté sur la figure 1 une tête 20 pour l'entraînement en un mouvement alterné de balayage d'un bras d'essuie-glace 22 qui est monté articulé sur la partie avant 24 de la tête d'entraînement.

La partie arrière 26 de la tête d'entraînement 20 est prévue pour être montée et liée en rotation sur l'extrémité libre 28 d'un arbre rotatif d'entraînement 30, la liaison étant ici assurée par l'intermédiaire d'une portion conique cannelée 32 de l'extrémité 28 de l'arbre 30 et par un écrou de serrage 34 qui est prévu pour coopérer avec une portion de face supérieure plane 36 de la partie arrière 26 de la tête d'entraînement 20.

Selon cet agencement connu, la direction générale de l'axe d'articulation 38 du bras 22 sur la partie avant 24 de la tête d'entraînement 20 est sensiblement perpendiculaire à la direction générale de l'axe de l'arbre d'entraînement 30.

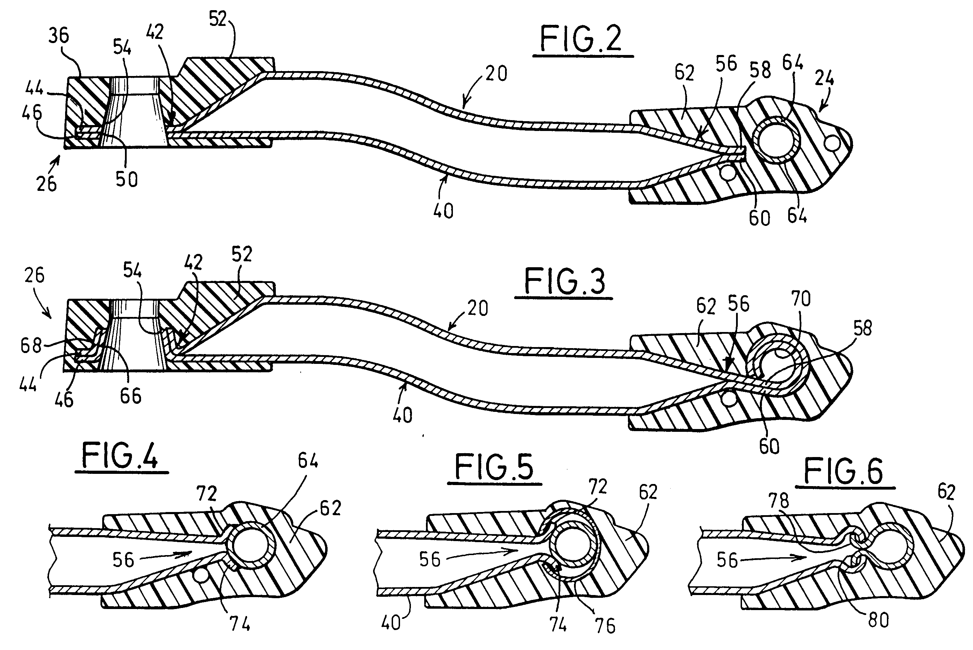

Comme cela est illustré clairement aux figures 1 et 2, la tête d'entraînement 20 est constituée pour l'essentiel par un corps tubulaire en tôle 40 de section générale cylindrique circulaire creuse.

Dans les modes de réalisation schématisés aux figures 2 et 3, le corps tubulaire allongé 40 présente un profil coudé.

Conformément à l'invention, la portion d'extrémité arrière 42 du corps tubulaire 40 est une portion aplatie dont les faces parallèles et opposées, supérieure 44 et inférieure 46 en considérant la figure 2, sont ici jointives.

Les deux faces 44 et 46 comportent chacune un trou 48, 50 pour le passage de l'extrémité 28 de l'arbre d'entraînement 30.

La partie arrière de montage 26 est complétée par un élément rapporté de montage 52 qui est ici réalisé sous la forme d'un élément de fonderie surmoulé sur la portion d'extrémité arrière aplatie 42 du corps tubulaire 40 et qui comporte un trou débouchant 54 réalisé venu de matière par moulage qui présente un profil interne en partie conique, complémentaire du profil externe de l'extrémité 28 de l'arbre d'entraînement 30.

Lorsque la tête d'entraînement 20 est montée sur l'extrémité 28 de l'arbre d'entraînement 30, cette dernière traverse les trous 48, 50 et 54 et assure ainsi la parfaite tenue longitudinale de l'élément de montage surmoulé 52 par rapport à la portion d'extrémité arrière aplatie 42 du corps tubulaire 40.

La portion d'extrémité avant 56 du corps tubulaire 20 est également partiellement aplatie pour présenter, au voisinage de son extrémité avant, deux faces parallèles opposées, supérieure 58 et inférieure 60 qui sont ici jointives.

La partie avant comporte également un élément rapporté d'articulation 62 qui est réalisé par surmoulage et qui est complété par un insert métallique tubulaire 64 destiné à recevoir l'axe d'articulation 38 du bras d'essuie-glace 22.

Selon un détail de réalisation qui n'est pas illustré sur les figures, la partie centrale de l'insert 64 peut être partiellement dégagée, c'est-à-dire non recouverte par l'élément surmoulé 62 pour permettre un accrochage d'un ressort d'essuyage (non représenté) interposé entre la tête d'entraînement 20 et le bras d'essuie-glace 22.

Dans les différents modes et variantes de réalisation, qui seront décrits par la suite, des composants identiques ou similaires à ceux décrits en référence aux figures 1 et 2 sont désignés par les mêmes chiffres de référence.

Dans le mode de réalisation illustré sur la figure 3, on constate que chacun des trous 48 et 50 formés dans les faces jointives 44 et 46 de la portion d'extrémité arrière aplatie 42 du corps tubulaire 40 se prolonge, vers le haut en considérant la figure 2, par un collet conique 66, 68 qui sont tous les deux emboîtés l'un dans l'autre et qui assurent un parfait positionnement et une meilleure tenue longitudinale de l'élément surmoulé 52 sur la partie arrière du corps tubulaire 40. Les deux collets coniques 66 et 68 augmentent également la résistance de la partie arrière de montage 26 lors du serrage de l'écrou 34.

La portion d'extrémité avant 56 du corps tubulaire 40 comporte deux faces opposées et parallèles 58 et 60 qui sont roulées autour d'un axe sensiblement perpendiculaire à la direction longitudinale principale du corps tubulaire 40 pour, d'une part, délimiter un logement sensiblement cylindrique 70 destiné à recevoir l'axe d'articulation 38, remplaçant ainsi l'insert 64 illustré sur la figure 2 et, d'autre part, accroître la tenue longitudinale de l'élément surmoulé 62 sur la portion d'extrémité avant du corps tubulaire 40.

Dans la variante de réalisation illustrée sur la figure 4, l'insert tubulaire 64 est préalablement soudé contre des portions d'extrémité 72, 74 conformées à cet effet aux extrémités libres des faces opposées et aplaties 58 et 60 de la portion d'extrémité avant aplatie du corps tubulaire 40.

La variante illustrée sur la figure 5 diffère de celle illustrée sur la figure 4 en ce que l'insert 64 est, préalablement à l'opération de surmoulage de l'élément 62, fixé au moyen d'un anneau élastique fendu cylindrique 76 sur les pattes d'extrémité 72 et 74.

Enfin, dans la variante de réalisation illustrée sur la figure 6, les pattes d'extrémité 72 et 74 sont conformées en crochets se faisant vis-à-vis pour délimiter une ouverture dans laquelle sont reçues des pattes d'accrochage 78 et 80 formées dans l'insert 64 qui est ici réalisé sous la forme d'un élément cylindrique fendu longitudinalement.

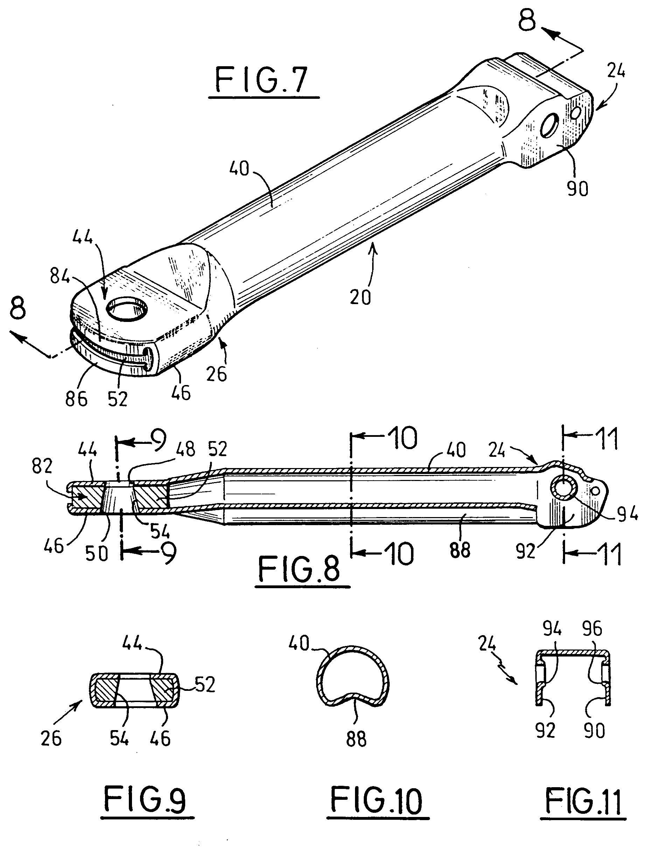

Dans le mode de réalisation illustré aux figures 7 à 11, la portion d'extrémité arrière aplatie du corps tubulaire 20 est moins aplatie que dans les modes de réalisation décrits précédemment et les faces parallèles et opposées 44 et 46 ne sont plus jointives, mais délimitent entre elles un logement 82 qui reçoit un élément rapporté complémentaire de montage 52.

L'élément 62 peut être réalisé par moulage, indépendamment et préalablement au conformage de la portion d'extrémité arrière du corps tubulaire 40 dans laquelle il est préalablement mis en place et se trouve enfermé à l'issue de l'opération de conformage visant à aplatir les faces opposées 44 et 46.

Comme on peut le voir sur la figure 7, les bords d'extrémité arrière 84, 86 de la partie arrière du corps tubulaire 40 sont rabattus transversalement l'un vers l'autre 82, 84 pour retenir longitudinalement l'élément 52 dans son logement 82.

Comme on peut le voir sur la figure 10, la partie principale, rectiligne, du corps tubulaire 40 peut également présenter une nervure longitudinale de renfort 88.

La partie avant 24 d'articulation du bras d'essuie-glace 22 est ici réalisée venue de matière avec le corps tubulaire cylindrique principal 40 par découpage et pliage de manière à délimiter deux joues latérales parallèles et opposées 90 et 92 et des manchons 94 et 96 de guidage de l'axe d'articulation 38.

Le corps tubulaire principal en tôle 40 peut être réalisé, par exemple par la technique du roulage après découpe et conformage des parties arrière de montage et avant d'articulation.

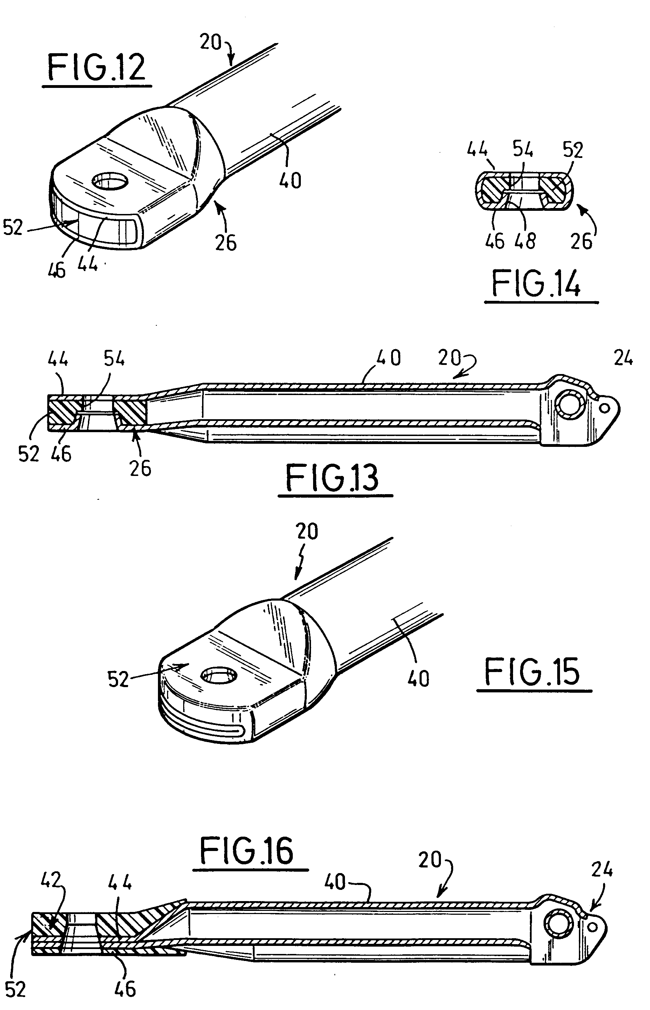

Dans le mode de réalisation illustré aux figures 12 à 14, et si on le compare au mode de réalisation précédent illustré aux figures 7 à 11, les bords d'extrémité arrière des faces aplaties opposées 44 et 46 ne sont pas rabattus transversalement l'un vers l'autre pour retenir l'élément rapporté de montage 52, la tenue longitudinale de ce dernier par rapport au corps tubulaire principal 40 étant assuré du fait de la présence d'un collet conique 68 qui est reçu dans une portion correspondante du trou débouchant 54 formé dans l'élément rapporté 52.

Enfin, dans le mode de réalisation illustré aux figures 15 et 16, les deux faces parallèles et opposées 44 et 46 de la portion d'extrémité arrière aplatie 42 du corps tubulaire 40 de la tête d'entraînement 20 sont jointives, comme dans le cas de la figure 2, et l'élément rapporté de montage 52 est réalisé sous la forme d'un élément surmoulé tandis que la partie avant d'articulation 24 est réalisée d'une manière similaire à celle illustrée aux figures 7 à 13.

Les éléments rapportés, surmoulés ou non, peuvent être réalisés en tout matériau adapté, métallique ou plastique.

Lors des opérations de conformage du corps tubulaire et de ses portions d'extrémités arrière et avant, et lors des opérations de surmoulage, il est possible d'incorporer des composants permettant d'assurer une fonction de lavage au moyen de l'essuie-glace tels que des conduites, des gicleurs, ou des éléments pour la fixation de ces composants.

## Revendications

1. Essuie-glace de véhicule automobile du type comportant une tête d'entraînement (20) comportant un corps tubulaire en tôle (40) de forme générale allongée, une partie avant d'articulation (24) sur laquelle est articulé un bras d'essuie-glace (22) qui porte un balai d'essuie-glace, et comportant une partie arrière de montage (26) qui est réalisée sous la forme d'un élément rapporté (52) fixé sur une portion d'extrémité arrière du corps tubulaire (40) et qui permet le montage de la tête d'entraînement (20) sur l'extrémité (28) d'un arbre (30) d'entraînement en rotation de l'essuie-glace, caractérisé en ce que la portion d'extrémité arrière du corps tubulaire (20) est une portion aplatie (42, 44, 46) sur laquelle est fixé l'élément rapporté (52) de montage.

2. Essuie-glace selon la revendication 1, caractérisé en ce que la portion d'extrémité arrière aplatie (42) du corps tubulaire (40) s'étend dans un plan sensiblement perpendiculaire à l'axe de l'arbre d' entraînement (30).

3. Essuie-glace selon l'une des revendications 1 ou 2, caractérisé en ce que les faces parallèles opposées (44, 46) de la portion d'extrémité arrière aplatie (42) du corps tubulaire (40) et l'élément rapporté de montage (52) comportent des trous alignés (48, 50, 54) pour le passage de l'extrémité de l'arbre d'entraînement.

4. Essuie-glace selon la revendication 3, caractérisé en ce que au moins l'un (48) des trous (48, 50) formés dans les faces parallèles opposées (44, 46) de la portion d'extrémité arrière aplatie (42) du corps tubulaire (40) comporte un collet cylindrique ou conique (66, 68) réalisé venu de matière par déformation de la tôle.

5. Essuie-glace selon l'une quelconque des revendications 1 à 4, caractérisé en ce que l'élément rapporté de montage (52) est réalisé par moulage.

6. Essuie-glace selon la revendication 5, caractérisé en ce que l'élément rapporté de montage (52) est surmoulé sur la portion d'extrémité arrière aplatie (42) du corps tubulaire (40).

7. Essuie-glace selon la revendication 6, caractérisé en ce que les faces parallèles opposées (44, 46) de la portion d'extrémité arrière aplatie (42) du corps tubulaire (40) sont jointives.

8. Essuie-glace selon les revendication 4, 6 et 7 prises en combinaison, caractérisé en ce que chacun des deux trous (48, 50) formés dans les faces parallèles opposées (44, 46) de la portion d'extrémité arrière aplatie du corps tubulaire (40) comporte un collet conique (66, 68), les deux collets étant emboîtés l'un dans l'autre.

9. Essuie-glace selon l'une quelconque des revendications 1 à 4, caractérisé en ce que les faces parallèles opposées (44, 46) de la portion d'extrémité arrière aplatie (42) du corps tubulaire (40) sont espacées l'une de l'autre et délimitent un logement (82) dans lequel est agencé l'élément de montage rapporté (52).

10. Essuie-glace selon la revendication 9, caractérisé en ce que les bords d'extrémité arrière (84, 86) des faces parallèles opposées de la portion d'extrémité arrière aplatie (42) du corps tubulaire (40) sont rabattus transversalement pour obturer au moins partiellement l'extrémité arrière du corps tubulaire (40).

11. Essuie-glace selon l'une quelconque des revendications précédentes, caractérisé en ce que la partie avant d'articulation (24) de la tête d'entraînement (20) est réalisée sous la forme d'un élément d'articulation (62) rapporté sur la portion d'extrémité avant (46) du corps tubulaire (40).

12. Essuie-glace selon la revendication 11, caractérisé en ce que l'élément rapporté d'articulation (62) est surmoulé sur la portion d'extrémité avant (56) du corps tubulaire (40).

13. Essuie-glace selon l'une des revendications 11 ou 12, caractérisé en ce que la partie avant d'articulation comporte un insert (64) pour recevoir l'axe d'articulation du bras d'essuie-glace (22).

14. Essuie-glace selon la revendication 13, caractérisé en ce que l'insert est réalisé venu de matière (70) avec la portion d'extrémité avant (56) du corps tubulaire (40).

15. Essuie-glace selon la revendication 13, caractérisé en ce que l'insert (64) est fixé à la portion d'extrémité avant (56) du corps tubulaire (40).

16. Essuie-glace selon l'une quelconque des revendications 1 à 10, caractérisé en ce que la partie avant d'articulation (24) de la tête d'entraînement (20) est réalisée venue de matière avec la portion avant du corps tubulaire (40).

17. Essuie-glace selon l'une quelconque des revendications précédentes, caractérisé en ce que le corps tubulaire (40) est sensiblement rectiligne.

18. Essuie-glace selon l'une quelconque des revendications 1 à 16, caractérisé en ce que le corps tubulaire (40) présente un profil coudé.

19. Essuie-glace selon l'une quelconque des revendications précédentes, caractérisé en ce que le corps tubulaire (40) comporte au moins une nervure longitudinale de rigidification (88).

## Claims

1. A motor vehicle screen wiper, of the type that includes a driving head (20) comprising a tubular body (40) formed in a generally elongate shape from sheet metal, and an articulating front portion (24) on which is articulated a screen wiper arm (22) which carries a wiper blade, and further comprising a fastening rear portion (26) made in the form of an attached element (52), which is fixed on a rear terminal portion of the tubular body (40) and which enables the driving head (20) to be mounted on the end (28) of a spindle (30) for driving the screen wiper in rotation, characterised in that the rear end portion of the tubular body (20) is a flattened portion (42, 44, 46), on which the attached fastening element (52) is fixed.

2. A screen wiper according to Claim 1, characterised in that the flattened rear end portion (42) of the tubular body (40) lies in a plane substantially at right angles to the axis of the drive spindle (30).

3. A screen wiper according to Claim 1 or Claim 2, characterised in that the opposed parallel faces (44, 46) of the flattened rear end portion (42) of the tubular body (40) and the attached fastening element (52) include holes (48, 50, 54) in alignment with each other for the passage of the end of the drive spindle through them.

4. A screen wiper according to Claim 3, characterised in that at least one (48) of the holes (48, 50) formed in the opposed parallel faces (44, 46) of the flattened rear end portion (42) of the tubular body (40) include a cylindrical or conical portion (66, 68) formed integrally by deformation of the sheet metal.

5. A screen wiper according to any one of Claims 1 to 4, characterised in that the attached fastening element (52) is formed by moulding.

6. A screen wiper according to Claim 5, characterised in that the attached fastening element (52) is moulded on the flattened rear end portion (42) of the tubular body (40).

7. A screen wiper according to Claim 6, characterised in that the opposed parallel faces (44, 46) of the flattened rear end portion (42) of the tubular body (40) are in mutual engagement.

8. A screen wiper according to Claims 4, 6 and 7 taken in combination, characterised in that each of the two holes (48, 50) formed in the opposed parallel faces (44, 46) of the flattened rear end portion of the tubular body (40) comprises a conical collar portion (66, 68), the two collar portions being nested one within the other.

9. A screen wiper according to any one of Claims 1 to 4, characterised in that the opposed parallel faces (44, 46) of the flattened rear end portion (42) of the tubular body (40) are spaced from each other and define a housing, in which the attached fastening element (52) is disposed.

10. A screen wiper according to Claim 9, characterised in that the rear terminal edges (84, 86) of the opposed parallel faces of the flattened rear end portion (42) of the tubular body (40) are bent back transversely so as to cover at least part of the rear end of the tubular body (40).

11. A screen wiper according to any one of the preceding Claims, characterised in that the articulating front portion (24) of the driving head (20) is made in the form of an articulating element (62) which is attached on the front end portion (56) of the tubular body (40).

12. A screen wiper according to Claim 11, characterised in that the attached articulating element (62) is moulded on the front end portion (56) of the tubular body (40).

13. A screen wiper according to Claim 11 or Claim 12, characterised in that the articulating front portion includes an insert (64) for receiving the pivot pin articulating the screen wiper arm (22).

14. A screen wiper according to Claim 13, characterised in that the insert (70) is formed integrally with the front end portion (56) of the tubular body (40).

15. A screen wiper according to Claim 13, characterised in that the insert (64) is fixed to the front end portion (56) of the tubular body (40).

16. A screen wiper according to any one of Claims 1 to 10, characterised in that the articulating front portion (24) of the driving head (20) is formed integrally with the front portion of the tubular body (40).

17. A screen wiper according to any one of the preceding Claims, characterised in that the tubular body (40) is substantially straight.

18. A screen wiper according to any one of Claims 1 to 16, characterised in that tubular body (40) has a bent profile.

19. A screen wiper according to any one of the preceding Claims, characterised in that the tubular body (40) includes at least one longitudinal stiffening rib (88).

## Patentansprüche

1. Scheibenwischer eines Kraftfahrzeugs, umfassend einen Antriebskopf (20), der einen rohrförmigen Körper aus Blech (40) mit allgemein länglicher Form und einen vorderen Gelenkteil (24) enthält, an dem ein Scheibenwischerarm (22), der ein Scheibenwischerblatt trägt, angelenkt ist, und der einen hinteren Montageteil (26) enthält, der in Form eines angefügten Elements (52) ausgeführt ist, das an einem hinteren Endstück des rohrförmigen Körpers (40) befestigt ist und das die Montage des Antriebskopfes (20) am Ende (28) einer Antriebswelle (30) für den drehenden Antrieb des Scheibenwischers ermöglicht, **dadurch gekennzeichnet,** daß das hintere Endstück des rohrförmigen Körpers (40) ein abgeflachtes Teilstück (42, 44, 46) ist, an dem das angefügte Montageelement (52) befestigt ist.

2. Scheibenwischer nach Anspruch 1 , **dadurch gekennzeichnet,** daß sich das abgeflachte hintere Endstück (42) des rohrförmigen Körpers (40) in einer Ebene erstreckt, die in etwa senkrecht zur Achse der Antriebswelle (30) verläuft.

3. Scheibenwischer nach einem der Ansprüche 1 oder 2, **dadurch gekennzeichnet,** daß die gegenüberliegenden parallelen Seiten (44, 46) des abgeflachten hinteren Endstücks (42) des rohrförmigen Körpers (40) und das angefügte Montageelement (52) aufeinander ausgerichtete Löcher (48, 50, 54) für den Durchgang des Endes der Antriebswelle enthalten.

4. Scheibenwischer nach Anspruch 3 , **dadurch gekennzeichnet,** daß mindestens eines (48) der Löcher (48, 50), die in die gegenüberliegenden parallelen Seiten (44, 46) des abgeflachten hinteren Endstücks (42) des rohrförmigen Körpers (40) eingearbeitet sind, einen zylindrischen oder konischen Bund (66, 68) umfaßt, der einstückig durch Verformung des Blechs ausgeführt ist.

5. Scheibenwischer nach einem der Ansprüche 1 bis 4, **dadurch gekennzeichnet,** daß das angefügte Montageelement (52) als Formteil ausgeführt ist.

6. Scheibenwischer nach Anspruch 5 , **dadurch gekennzeichnet,** daß das angefügte Montageelement (52) auf dem abgeflachten hinteren Endstück (42) des rohrförmigen Körpers (40) aufgeformt ist.

7. Scheibenwischer nach Anspruch 6 , **dadurch gekennzeichnet,** daß die gegenüberliegenden parallelen Seiten (44, 46) des abgeflachten hinteren Endstücks (42) des rohrförmigen Körpers (40) aneinander angefügt sind.

8. Scheibenwischer nach einem der Ansprüche 4,6 und 7 in Kombination, **dadurch gekennzeichnet,** daß jedes der beiden Löcher (48, 50), die in die gegenüberliegenden parallelen Seiten (44, 46) des abgeflachten hinteren Endstücks des rohrförmigen Körpers (40) eingearbeitet sind, einen konischen Bund (66, 68) umfaßt, wobei die beiden Bünde ineinander eingepaßt sind.

9. Scheibenwischer nach einem der Ansprüche 1 bis 4, **dadurch gekennzeichnet,** daß die gegenüberliegenden parallelen Seiten (44, 46) des abgeflachten Endstücks (42) des rohrförmigen Körpers (40) zueinander beabstandet sind und eine Aufnahme (82) begrenzen, in der das angefügte Montageelement (52) angeordnet ist.

10. Scheibenwischer nach Anspruch 9 , **dadurch gekennzeichnet,** daß die hinteren Abschlußkanten (84, 86) der gegenüberliegenden parallelen Seiten des abgeflachten hinteren Endstücks (42) des rohrförmigen Körpers (40) quer umgebogen sind, um das hintere Ende des rohrförmigen Körpers (40) zumindest teilweise zu verschließen.

11. Scheibenwischer nach einem der vorangehenden Ansprüche, **dadurch gekennzeichnet**, daß der vordere Gelenkteil (24) des Antriebskopfes (20) in Form eines am vorderen Endstück (46) des rohrförmigen Körpers (40) angefügten Gelenkelements (62) ausgeführt ist.

12. Scheibenwischer nach Anspruch 11 , **dadurch gekennzeichnet,** daß das angefügte Gelenkelement (62) auf dem vorderen Endstück (56) des rohrförmigen Körpers (40) aufgeformt ist.

13. Scheibenwischer nach einem der Ansprüche 11 oder 12 , **dadurch gekennzeichnet**, daß der vordere Gelenkteil einen Einsatz (64) für die Aufnahme der Gelenkachse des Scheibenwischerarms (22) umfaßt.

14. Scheibenwischer nach Anspruch 13 , **dadurch gekennzeichnet,** daß der Einsatz einstückig (70) mit dem vorderen Endstück (56) des rohrförmigen Körpers (40) ausgeführt ist.

15. Scheibenwischer nach Anspruch 13 , **dadurch gekennzeichnet,** daß der Einsatz (64) am vorderen Endstück (56) des rohrförmigen Körpers (64) befestigt ist.

16. Scheibenwischer nach einem der Ansprüche 1 bis 10, **dadurch gekennzeichnet,** daß der vordere Gelenkteil (24) des Antriebskopfes (20) einstückig mit dem vorderen Endstück des rohrförmigen Körpers (40) ausgeführt ist.

17. Scheibenwischer nach einem der vorangehenden Ansprüche, **dadurch gekennzeichnet**, daß der rohrförmige Körper (40) in etwa geradlinig ausgeführt ist.

18. Scheibenwischer nach einem der Ansprüche 1 bis 16, **dadurch gekennzeichnet,** daß der rohrförmige Körper (40) ein abgewinkeltes Profil aufweist.

19. Scheibenwischer nach einem der vorangehenden Ansprüche, **dadurch gekennzeichnet**, daß der rohrförmige Körper (40) mindestens eine in Längsrichtung verlaufende Versteifungsrippe (88) aufweist.
